# EUROPÄISCHE PATENTSCHRIFT

(11) **EP 1 930 637 B1**
(45) Veröffentlichungstag und Bekanntmachung des Hinweises auf die Patenterteilung: **30.11.2011**
(21) Anmeldenummer: 07018996.4
(22) Anmeldetag: 27.09.2007
(51) Int. Cl.: F16K 27/00, F16L 21/08, F16L 37/14, F16L 39/00

(54) **Anschlussvorrichtung für Ventile und damit ausgestattete Ventilanordnung**
Connecting device for valves and valve assembly fitted with the same
Dispositif de raccordement pour vannes et bloc vanne équipé de celui-ci

(30) Priorität: 08.12.2006 DE 102006057850
(43) Veröffentlichungstag der Anmeldung: 11.06.2008
(73) Patentinhaber: FESTO AG & Co. KG, 73734 Esslingen (DE)
(72) Erfinder: Hesser, Robert, 73240 Wendlingen (DE); Bogdanowicz, Grzegorz, 73760 Ostfildern (DE)
(74) Vertreter: Abel, Martin

(56) Entgegenhaltungen:
- EP-A- 0 767 330
- EP-A- 0 897 080
- DE-A1-102007 023 160
- US-A- 4 089 549

## Beschreibung

Die Erfindung betrifft eine Anschlussvorrichtung für Ventile, mit einem sich längs einer Hauptachse erstreckenden Anschlusskörper, der mehrere in Richtung der Hauptachse aufeinanderfolgende Ventil-Montageplätze aufweist, an denen Ventile montierbar oder montiert sind, und der mit mindestens einer Reihe aus mehreren, ebenfalls in Richtung der Hauptachse aufeinanderfolgenden, quer zu der Hauptachse zu einer gemeinsamen Anschlussfläche des Anschlusskörpers ausmündenden Aufnahmevertiefungen versehen ist, die mit in dem Anschlusskörper verlaufenden Anschlusskörperkanälen kommunizieren und in die zum Anschließen von Fluidleitungen geeignete Anschlusseinheiten einsteckbar oder eingesteckt sind, deren eingesteckte Gebrauchsstellung durch zu der Anschlussvorrichtung gehörende Verriegelungsmittel bezüglich des Anschlusskörpers lösbar fixierbar ist, wobei die Verriegelungsmittel mindestens einen sich in dem Anschlusskörper längs dessen Hauptachse erstreckenden und dabei zumindest eine Mehrzahl von Aufnahmevertiefungen der mindestens einen Reihe von Aufnahmevertiefungen quer durchsetzenden Verriegelungskanal enthalten, in den eine zu der Anschlussvorrichtung gehörende, längsverschiebbare Verriegelungsleiste einsteckbar oder eingesteckt ist, die eine Verriegelungsstellung einnehmen kann, in der sie gleichzeitig durch mehrere der aufeinanderfolgenden Aufnahmevertiefungen hindurchgreift und mit den darin eingesteckten Anschlusseinheiten unter Verhinderung deren Herausziehens in Verriegelungseingriff steht.

Die Erfindung betrifft ferner eine mit einer solchen Anschlussvorrichtung ausgestattete Ventilanordnung.

Aus der US-A-4 089 549 ist eine Anschlussvorrichtung der oben genannten Art bekannt, bei der an einen Verteilerkörper eine Platte montiert ist, sodass dazwischen eine Ausnehmung gebildet ist, in der eine Halteplatte verschiebbar angeordnet ist. Die Halteplatte hat mehrere schlüssellochartig konturierte Öffnungen, die dazu dienen, eingesteckte Schlauchverbinder in Abhängigkeit von der Position der Halteplatte wahlweise zu fixieren oder zur Montage oder Demontage freizugeben.

Eine in der US 6,832,788 B2 beschriebene Ventilanordnung enthält eine zur Ausstattung mit Ventilen vorgesehene Anschlussvorrichtung, die einen von Anschlusskörperkanälen durchsetzten, in Richtung seiner Längsachse mehrfach segmentierten Anschlusskörper aufweist. An einer seitlichen Anschlussfläche des Anschlusskörpers befindet sich eine Reihe von Aufnahmevertiefungen, in die zum Anschließen von Fluidleitungen geeignete Anschlusseinheiten eingesetzt sind. Fixiert sind diese Anschlusseinheiten am Anschlusskörper durch Verriegelungsmittel, die für jede Anschlusseinheit einen U-förmigen Verriegelungsbügel enthalten, der von der Seite der Ventil-Montageplätze her in den Anschlusskörper einsteckbar ist, sodass er in die zugeordnete Anschlusseinheit eingreift und diese gegen Herausziehen sichert. Zwar können die Anschlusseinheiten hier sehr zuverlässig am Anschlusskörper fixiert werden. Wegen der großen Anzahl an Bauteilen ist die Handhabung allerdings ziemlich umständlich.

Bei einer aus der EP 0897080 B1 bekannten Ventilanordnung sind jedem Ventil zwei Anschlusseinheiten zugeordnet, die mittels eines gemeinsamen Verriegelungsbügels fixierbar sind. Der Gesamtaufwand zur Verriegelung der Anschlusseinheiten sämtlicher Ventile ist jedoch kaum geringer als im Falle des zuvor diskutierten Standes der Technik. Die aus dem Patent Abstract of Japan zur JP 08075071 A bekannte Ventilanordnung ist ebenfalls mit Verriegelungsbügeln zur gegenseitigen Fixierung von Komponenten ausgestattet, die jedoch anders als bei den zuvor erwähnten Bauformen in der Richtung der Hauptachse der Anordnung installiert werden. Hier ergibt sich der Nachteil, dass für die Montage und Demontage der Verriegelungsbügel ein Zerlegen der Anordnung in ihre einzelnen Komponenten notwendig ist.

Aus der US 7,073,825 B2 ist eine Fluiddruckvorrichtung bekannt, bei der eine Vielzahl von zum Anschließen von Fluidleitungen dienenden Anschlusseinheiten gemeinsam an einem Halter angebracht sind, sodass sie gemeinsam montiert und demontiert werden können. Gehalten wird diese Anordnung an einem Anschlussblock mittels mehreren von oben her eingesteckten elastischen Klammern.

Gemäß US 5,725,255 werden mehrere Anschlusseinheiten eines Ventils mittels eines von der Seite her ansteckbaren U-förmigen Bügels gehalten.

Die vorliegende Erfindung hat sich zur Aufgabe gestellt, eine Anschlussvorrichtung mit zugehöriger Ventilanordnung zu schaffen, bei der auch eine größere Anzahl von Anschlusseinheiten für Fluidleitungen zeitsparend installierbar ist.

Zur Lösung dieser Aufgabe ist bei einer Anschlussvorrichtung und einer Ventilanordnung der eingangs genannten Art vorgesehen, dass mindestens einer Reihe von Aufnahmevertiefungen gleichzeitig zwei zueinander parallele Verriegelungskanäle zugeordnet sind, die die Aufnahmevertiefungen mit Querabstand durchsetzen, und in die jeweils eine Verriegelungsleiste einsetzbar oder eingesetzt ist.

Die Erfindung schafft die Möglichkeit einer gemeinsamen Fixierung mehrerer und vorzugsweise sämtlicher ein und derselben Reihe von Aufnahmevertiefungen zugeordneter Anschlusseinheiten. Durch das Einstecken der Verriegelungsleiste in den mit der Hauptachse des Anschlusskörpers gleichgerichteten Verriegelungskanal können sämtliche zuvor eingeführten Anschlusseinheiten in einem Arbeitsgang und somit sehr zeitsparend fixiert werden. Durch die Zuordnung mindestens einer Verriegelungsleiste zu gleichzeitig mehreren Aufnahmevertiefungen ein und derselben Aufnahmevertiefungsreihe ergibt sich zudem eine erhebliche Einsparung an Bauteilen. Es ist prinzipiell möglich, sämtliche zu ein und derselben Reihe von Aufnahmevertiefungen gehörenden Anschlusseinheiten mittels ein und derselben Verriegelungsleiste in ihrer Lage zu sichern. Unterliegen die Anschlusseinheiten keiner hohen Beanspruchung, kann es genügen, jede Anschlusseinheit durch nur eine Verriegelungsleiste zu fixieren. Für höhere Beanspruchungen empfiehlt sich jedoch eine Mehrfachverriegelung mittels zweier Verriegelungsleisten, die mit Querabstand zueinander durch die einzelnen Aufnahmevertiefungen hindurchtreten und dadurch an in Umfangsrichtung zueinander beabstandeten unterschiedlichen Umfangsabschnitten der Anschlusseinheiten angreifen können. Die Verriegelungsleisten beziehungsweise die diese aufnehmenden Verriegelungskanäle können hierbei insbesondere an einander diametral gegenüberliegenden Umfangsbereichen der Aufnahmevertiefungen vorgesehen sein. Vorteilhafte Weiterbildungen der Erfindung gehen aus den Unteransprüchen hervor.

Zweckmäßigerweise ist sämtlichen Aufnahmevertiefungen mindestens einer Aufnahmevertiefungsreihe mindestens ein gemeinsamer Verriegelungskanal zugeordnet, in den eine Verriegelungsleiste einsteckbar ist, die die gleichzeitige Verriegelung sämtlicher in diese Aufnahmevertiefungen einsetzbarer Anschlusseinheiten ermöglicht.

Insgesamt ist es von Vorteil, wenn die Aufnahmevertiefungen vom jeweils zugeordneten Verriegelungskanal im Bereich ihres Außenumfanges sekantenähnlich angeschnitten sind. Dadurch kann sich der Verriegelungseingriff auf den unmittelbaren Bereich des Außenumfanges der Anschlusseinheiten beschränken, während deren restlicher Querschnitt uneingeschränkt zum Hindurchführen eines Fluides nutzbar ist.

Sind einer Reihe von Aufnahmevertiefungen mehrere Verriegelungsleisten zugeordnet, können diese mehreren Verriegelungsleisten individuell ausgeführt und auch individuell betätigbar sein. Eine vereinfachte Handhabung resultiert aus einer Zusammenfassung der mehreren Verriegelungsleisten in einem einheitlich handhabbaren Verriegelungsschieber. Hierbei können dann beispielsweise die mehreren Verriegelungsleisten durch mindestens einen Quersteg miteinander verbunden sein, wobei dieser Quersteg gleichzeitig eine Handhabe bilden kann, an der der Verriegelungsschieber zur Betätigung erfasst werden kann.

Sind mehrere Reihen von Aufnahmevertiefungen vorhanden, empfiehlt es sich, diesen jeweils gesonderte Verriegelungsleisten zuzuordnen, sodass die Anschlusseinheiten der verschiedenen Reihen von Aufnahmevertiefungen unabhängig voneinander verriegelbar und entriegelbar sind. Gleichwohl besteht jedoch ohne weiteres auch die Möglichkeit, mindestens eine Verriegelungsleiste vorzusehen, die funktionell gleichzeitig mehreren Reihen von Aufnahmevertiefungen zugeordnet ist. Eine solche Verriegelungsleiste erstreckt sich dann zweckmäßigerweise zwischen zwei nebeneinanderliegenden Reihen von Aufnahmevertiefungen.

Eine besonders zweckmäßige Ausgestaltung sieht die Möglichkeit vor, die mindestens eine Verriegelungsleiste, ohne sie vom Anschlusskörper entfernen zu müssen, durch Verschieben längs der Hauptachse des Anschlusskörpers in einer Freigabestellung zu positionieren, in der zweckmäßigerweise sämtliche Anschlusseinheiten entriegelt sind.

In einem solchen Fall kann die Verriegelungsleiste beispielsweise jeweils im Verteilungsraster der Aufnahmevertiefungen angeordnete Verriegelungszungen und Freigabeaussparungen aufweisen, die sich abwechselnd im Bereich der Aufnahmevertiefungen platzieren lassen, sodass entweder, durch die Verriegelungszungen, die axiale Fixierung der Anschlusseinheiten bewirkt ist oder, durch die Freigabeaussparungen, deren Einstecken und Herausziehen möglich wird.

Um ein versehentliches Entriegeln auszuschließen, können Sicherungsmittel vorhanden sein, durch die die mindestens eine Verriegelungsleiste in der Verriegelungsstellung lösbar unverschiebbar festlegbar ist. Dies kann allein reibungsbedingt verwirklicht werden, beispielsweise durch eine vordefinierte Klemmung zwischen der Verriegelungsleiste und der Wandung des sie aufnehmenden Verriegelungskanals. Zusätzlich oder alternativ kann aber auch mindestens ein gesondertes Sicherungselement vorhanden sein, das von Fall zu Fall betätigbar ist. Das Sicherungselement kann beispielsweise eine Sicherungsschraube sein.

Eine besonders vorteilhafte Herstellungsmöglichkeit eröffnet sich, wenn der mindestens eine Verriegelungskanal nutartig ausgebildet und längsseitig offen ist, Letzteres insbesondere zu der Anschlussfläche hin, zu der auch die Aufnahmevertiefungen ausmünden. Ein derartiger Verriegelungskanal lässt sich bei Bedarf sowohl spanabhebend realisieren, als auch, besonders vorteilhaft, spanlos unmittelbar bei der Strangpressherstellung eines als Strangpressteil ausgebildeten einstückigen Anschlusskörpers.

Verriegelungskanal und zugehörige Verriegelungsleiste können im Querschnitt abgewinkelt oder abgebogen sein, wobei sich vor allem eine L-förmige Profilierung anbietet. Der eine L-Schenkel mündet hier dann insbesondere zu der Anschlussfläche hin aus, während der andere L-Schenkel den Aufnahmevertiefungen zugewandt ist. Beispielsweise wäre aber auch eine Profilierung nach Art einer T-Nut möglich.

Ist der mindestens eine Verriegelungskanal an beiden Stirnseiten des Anschlusskörpers offen, kann die zugeordnete Verriegelungsleiste wahlweise von der einen oder von der anderen Seite her installiert werden, was eine bessere Unabhängigkeit von den am Einsatzort der Anschlussvorrichtung vorhandenen örtlichen Gegebenheiten gewährleistet.

Nachfolgend wird die Erfindung anhand der beiliegenden Zeichnung näher erläutert. In dieser zeigen:
- Figur 1: eine bevorzugte Ausführungsform einer mit einer besonders zweckmäßig ausgebildeten Anschlussvorrichtung ausgestatteten Ventilanordnung in perspektivischer, teilweise aufgebrochener Darstellung,
- Figur 2: einen ausschnittsweisen Querschnitt durch die Anordnung aus Figur 1 gemäß Schnittlinie II-II,
- Figur 3: den Querschnitt aus Figur 2 in einer perspektivischen Ansicht und
- Figur 4: im Querschnitt gemäß Schnittlinie IV-IV aus Figur 1 einen Ausschnitt im Bereich von zur Positionssicherung der Verriegelungsleisten dienenden Sicherungsmitteln.

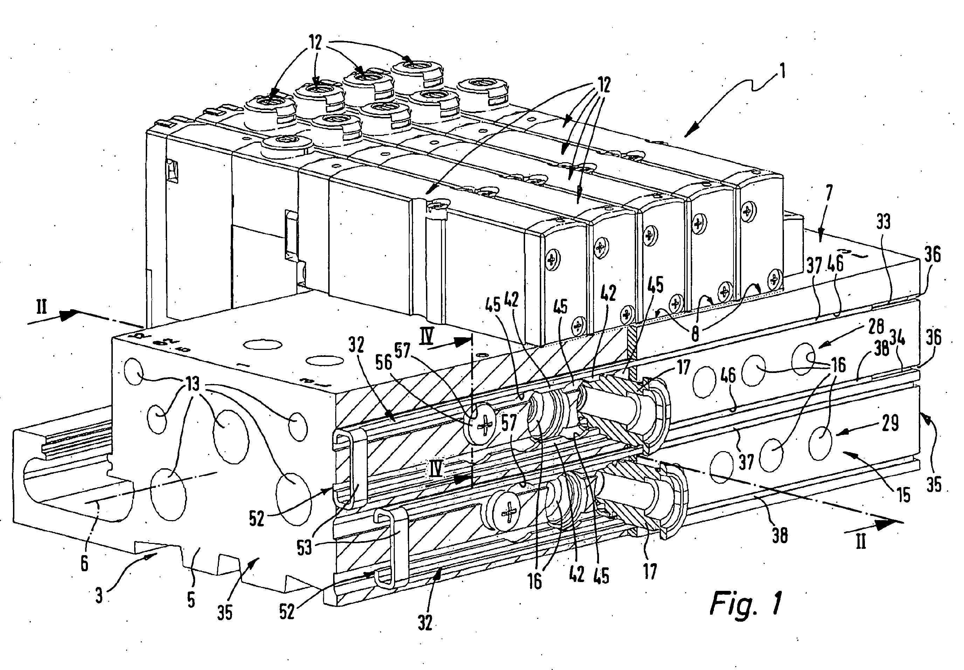

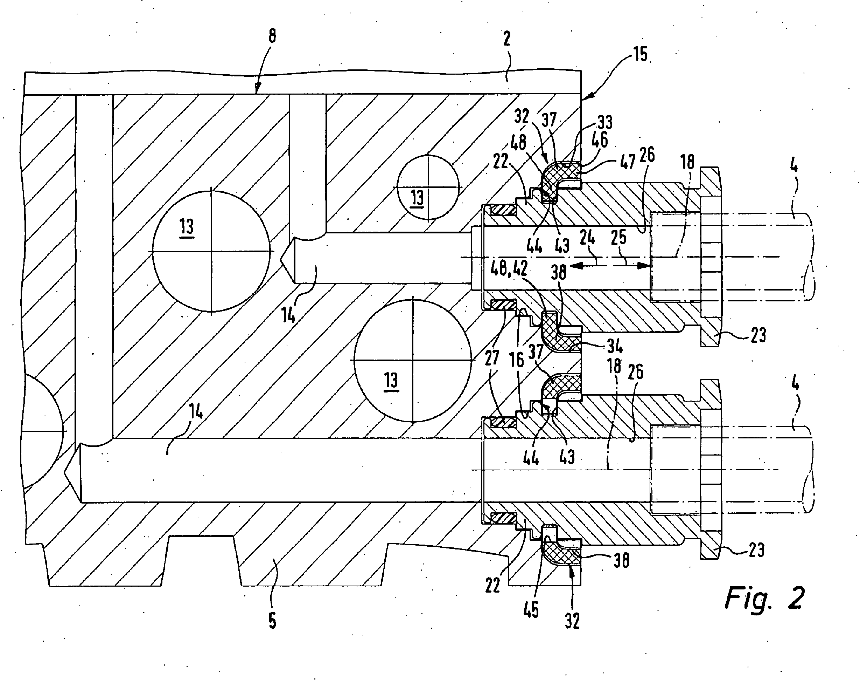

Die Figur 1 zeigt in ihrer Gesamtheit eine ventilanordnung 1, die eine mit Ventilen 2 ausgestattete Anschlussvorrichtung 3 umfasst. Die Anschlussvorrichtung 3 ermöglicht es, lediglich in Figur 2 angedeutete Fluidleitungen 4, die zu nicht weiter dargestellten Verbrauchern führen, fluidisch mit den Ventilen 2 zu verbinden. Auf diese Weise kann durch die Ventile 2 die Fluidströmung in den Fluidleitungen 4 beeinflusst werden.

Die Anschlussvorrichtung 3 enthält einen Anschlusskörper 5, der sich längs einer Hauptachse 6 erstreckt, bei der es sich insbesondere um die Längsachse des Anschlusskörpers 5 handelt. Der Anschlusskörper 5 besitzt eine Montagefläche 7, die in mehrere in Richtung der Hauptachse 6 aufeinanderfolgende Ventil-Montageplätze 8 eingeteilt ist, an denen jeweils, insbesondere in lösbarer Weise, eines der schon erwähnten Ventile 2 montiert ist. Bei den Ventilen 2 handelt es sich um Mehrwegeventile. Sie können elektrisch betätigt werden und verfügen jeweils über einen elektrisch aktivierbaren Ventilantrieb 12, beispielsweise in Gestalt eines oder mehrerer Magnetventile.

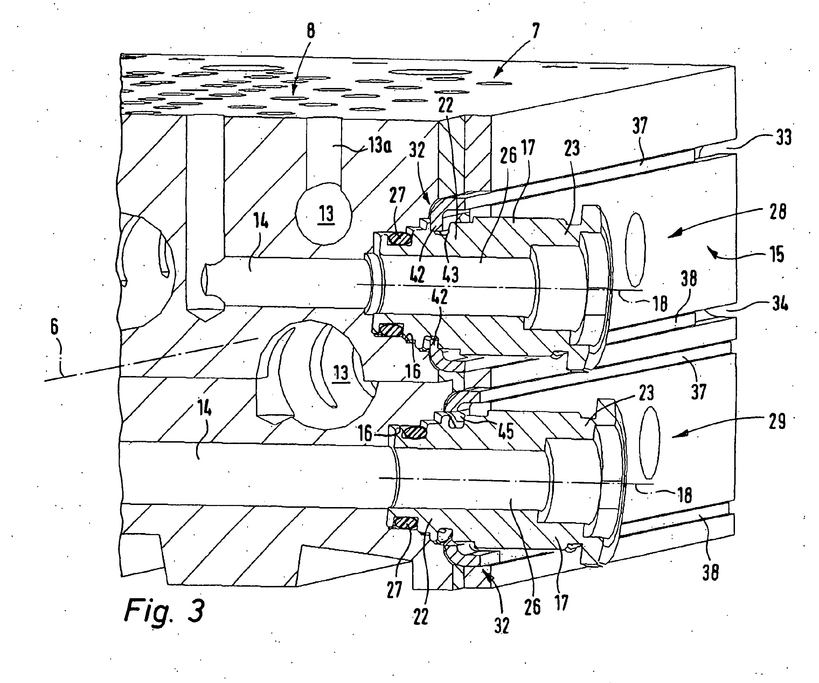

Der Anschlusskörper 5 ist in Richtung seiner Hauptachse 6 von mehreren ersten Anschlusskörperkanälen 13 durchsetzt, die, wie dies beispielsweise aus Figur 3 ersichtlich ist, über Zweigkanäle 13a zu den einzelnen Ventil-Montageplätzen 8 ausmünden. Dort kommunizieren sie mit nicht näher dargestellten Ventilkanälen der Ventile 2.

Typischerweise handelt es sich bei einem der ersten Anschlusskörperkanäle 13 um einen Speisekanal und bei mindestens einem weiteren der ersten Anschlusskörperkanäle 13 um einen Ablasskanal. Über den Speisekanal hinweg können die Ventile 2 mit einem von den Ventilen 2 zu verteilenden Druckmedium versorgt werden, während über den Ablasskanal das verbrauchte Druckmedium zurückströmt. Bevorzugt kommt Druckluft als Druckmedium zum Einsatz.

Von jedem Ventil-Montageplatz 8 gehen beim Ausführungsbeispiel zwei zweite Anschlusskörperkanäle 14 aus, die den Anschlusskörper 5 quer zur Hauptachse 6 durchsetzen und zu einer längsseitigen Anschlussfläche 15 des Anschlusskörpers 5 führen. Genauer gesagt enden die zweiten Anschlusskörperkanäle 14 zu je einer zu der Anschlussfläche 15 ausmündenden Aufnahmevertiefung 16, die geeignet ist, eine das Anschließen einer Fluidleitung 4 ermöglichende Anschlusseinheit 17 ganz oder teilweise aufzunehmen. Die Aufnahmevertiefung 16 besitzt eine Längsachse 18, die rechtwinkelig zu der Hauptachse 6 verläuft und insbesondere auch rechtwinkelig zu der Anschlussfläche 15 orientiert ist.

Montagefläche 7 und Anschlussfläche 15 besitzen insbesondere eine um 90° zueinander versetzte Ausrichtung, wobei sie sich insbesondere unmittelbar aneinander anschließen.

Die Anschlusseinheiten 17 verfügen über einen passend in die zugeordnete Aufnahmevertiefung 16 einsteckbaren Sockel 22, der eine in Richtung der Längsachse 18 nach außen ragende und über die Anschlussfläche 15 insbesondere vorstehende Befestigungseinrichtung 23 trägt, die in der Zeichnung nur schematisch angedeutet ist. Die Befestigungseinrichtung 23 ist insbesondere ausgebildet, um eine lösbare, abgedichtete Steckverbindung einer Fluidleitung 4, insbesondere eines Fluidschlauches, zu ermöglichen. Hierzu kann die Befestigungseinrichtung 23 eine Spannzange und/oder Befestigungskrallen besitzen, die die eingesteckte Fluidleitung 4 am Außenumfang beaufschlagen, um sie festzuhalten. Eine ebenfalls nicht weiter dargestellte ringförmige Dichtung der Befestigungseinrichtung 23 sorgt für einen fluiddichten Anschluss der Fluidleitung 4. Insbesondere kann die Befestigungseinrichtung 23 nach dem Vorbild der EP 0897080 B1 ausgebildet sein.

Es wäre auch möglich, als Befestigungseinrichtung 23 beispielsweise einen Rohrstutzen vorzusehen, der eine Außenverzahnung trägt und auf den eine elastische Fluidleitung aufsteckbar ist. Ebenfalls möglich wäre ein Befestigungsgewinde, das eine Schraubbefestigung der anzuschließenden Fluidleitung ermöglicht.

Montage und Demontage jeder Anschlusseinheit 17 an beziehungsweise von dem Anschlusskörper 5 geschehen durch in Richtung der Längsachse 18 stattfindendes Einstecken und Herausziehen in die beziehungsweise aus der Aufnahmevertiefung 16 gemäß den Pfeilen 24, 25.

Der Sockel 22 und die gestalterisch daran angepasste Aufnahmevertiefung 16 können, wie dies in der Zeichnung exemplarisch illustriert ist, in Richtung der Längsachse 18 abgestuft sein.

Die zweiten Anschlusskörperkanäle 14 können als Arbeitskanäle bezeichnet werden, weil über sie eine individuelle Verbindung des jeweils zugeordneten Ventils 2 mit einem anzusteuernden Verbraucher möglich ist.

Abweichend vom Ausführungsbeispiel, bei dem jeder Ventil-Montageplatz 8 und mithin jedes daran angeordnete Ventil 2 mit zwei zweiten Anschlusskörperkanälen 14 kommuniziert, wäre beispielsweise auch eine Bauform mit nur je einem zweiten Anschlusskörperkanal 14 denkbar. Die Anzahl hängt im Wesentlichen vom Typ der verwendeten Ventile 2 ab.

Jede Anschlusseinheit 17 ist von einem Durchgangskanal 26 durchsetzt, über den die Fluidverbindung zwischen dem Kanal der angeschlossenen Fluidleitung 4 und dem zugeordneten zweiten Anschlusskörperkanal 14 stattfindet.

Zur Vermeidung von Leckage trägt die Anschlusseinheit 17 am Außenumfang ihres Sockels 22 eine ringförmige Dichtung 27, die in der aus der Zeichnung ersichtlichen eingesteckten Gebrauchsstellung der Anschlusseinheit 17 unter Abdichtung am Innenumfang der Aufnahmevertiefung 16 anliegt. Allerdings könnte die Dichtung 27 auch axial dichtend ausgeführt sein, ebenso könnte sich die Dichtung 27 am Anschlusskörper 5 befinden.

Die Anschlusseinheiten 17 sind zweckmäßigerweise im Großen und Ganzen rohrähnlich gestaltet, wobei insbesondere im Bereich des Sockels 22 eine kreisförmige Außenkontur vorliegt, wie auch die Aufnahmevertiefung 16 selbst insbesondere kreisförmig konturiert ist.

In der Zeichnung sind der besseren Übersichtlichkeit wegen nur einige der Aufnahmevertiefungen 16 mit Anschlusseinheiten 17 ausgestattet, wobei Letztere dazuhin noch im Längsschnitt aufgebrochen sind.

Die Aufnahmevertiefungen 16 sind in zwei Reihen von Aufnahmevertiefungen zusammengefasst, im Folgenden als erste und zweite Aufnahmevertiefungsreihe 28, 29 bezeichnet. Letztere erstrecken sich mit Abstand parallel nebeneinander und hierbei in der Richtung der Hauptachse 6. Sind alle Aufnahmevertiefungen 16 mit Anschlusseinheiten 17 bestückt, ergeben sich dementsprechend zwei nebeneinanderliegende Reihen von Anschlusseinheiten 17.

Um quer zu den Reihenrichtungen Platz einzusparen und eine möglichst schmale Anschlussfläche 15 zu ermöglichen, können die Aufnahmevertiefungen 16 der beiden Aufnahmevertiefungsreihen 28, 29 in der Reihenrichtung versetzt zueinander angeordnet sein, insbesondere derart, dass sich eine auf Lücke gesetzte Zuordnung ergibt.

Insgesamt mit Bezugsziffer 32 bezeichnete Verriegelungsmittel ermöglichen es, die Anschlusseinheiten 17 einer jeweiligen Aufnahmevertiefungsreihe 28, 29 im eingesteckten Gebrauchszustand derart lösbar zu verriegeln, dass sie nicht mehr herausgezogen werden können. Im verriegelten Zustand sind die Anschlusseinheiten 17 in der Aufnahmevertiefung 16 axial im Wesentlichen unbeweglich fixiert.

Die Verriegelungsmittel 32 für die beiden Aufnahmevertiefungsreihen 28, 29 sind beim Ausführungsbeispiel identisch ausgeführt. Die weitere Beschreibung kann sich daher auf die in der Zeichnung jeweils oben liegenden Verriegelungsmittel 32 der ersten Aufnahmevertiefungsreihe 28 beschränken. Die Ausführungen gelten entsprechend für die zweite Aufnahmevertiefungsreihe 29.

Die der ersten Aufnahmevertiefungsreihe 28 zugeordneten Verriegelungsmittel 32 enthalten zwei unter gegenseitigem Abstand parallel zueinander und zugleich in Richtung der Hauptachse 6 verlaufende Verriegelungskanäle 33, 34, die so angeordnet sind, dass sie sämtliche Aufnahmevertiefungen 16 der ersten Aufnahmevertiefungsreihe 28 durchsetzen. Sie sind insbesondere so platziert, dass sie an einander diametral gegenüberliegenden Umfangsbereichen der Aufnahmevertiefungen 16 zu liegen kommen und diese somit jeweils an einer Stelle ihres Umfanges sekantenähnlich anschneiden. Beide Verriegelungskanäle 33, 34 sind stirnseitig offen, insbesondere an beiden Stirnseiten. Sie münden daher zu den beiden in der Richtung der Hauptachse 6 orientierten Stirnflächen 35 des Anschlusskörpers 5 aus.

Über eine oder beide stirnseitige Öffnungen 36 der beiden Verriegelungskanäle 33, 34 hinweg kann jeweils eine ebenfalls zu den Verriegelungsmitteln 32 zählende Verriegelungsleiste 37, 38 in den zugeordneten Verriegelungskanal 33, 34 längs eingeschoben werden. Auf diese Weise kann jede Verriegelungsleiste 37, 38 in einer in der Zeichnung in Verbindung mit der oben liegenden ersten Aufnahmevertiefungsreihe 28 gezeigten Verriegelungsstellung positioniert werden, in der sie gleichzeitig durch sämtliche Aufnahmevertiefungen 16 der ersten Aufnahmevertiefungsreihe 28 hindurchgreift und mit den darin eingesteckten Anschlusseinheiten 17 in Verriegelungseingriff steht.

Konkret enthält jede Verriegelungsleiste 37, 38 eine der Anzahl der in der zugeordneten Aufnahmevertiefungsreihe 28 enthaltenen Aufnahmevertiefungen 16 entsprechende Anzahl von Verriegelungszungen 42, die von außen her radial in die Aufnahmevertiefung 16 hineinragen und dabei in eine Verriegelungsausnehmung 43 des in der Aufnahmevertiefung 16 liegenden Längenabschnittes der jeweils zugeordneten Anschlusseinheit 17 eintauchen. Bei der Verriegelungsausnehmung 43 handelt es sich insbesondere um eine am Außenumfang des Sockels 22 ausgebildete Ringnut.

Die Verriegelungsausnehmung 43 ist axial innen, also an der der Befestigungseinrichtung 23 entgegengesetzten Axialseite, von einer Anschlagfläche 44 begrenzt, hier von der entsprechenden Nutflanke gebildet. Die Verriegelungszunge 42 ragt axial außen vor die Anschlagfläche 44 und verhindert somit das Herausziehen der Anschlusseinheit 17 aus der zugeordneten Aufnahmevertiefung 16.

Indem die Verteilung der Verriegelungszungen 42 in der Längsrichtung der Verriegelungsleiste 37, 38 der Verteilung der Aufnahmevertiefungen 16 der zugeordneten Aufnahmevertiefungsreihe 28 entspricht, können bei entsprechender Positionierung der Verriegelungsleisten 37, 38 jeweils sämtliche Anschlusseinheiten 17 gemeinsam verriegelt werden.

Vorzugsweise ist bei Bedarf jederzeit auch wieder eine Entriegelung möglich, um einzelne oder sämtliche Anschlusseinheiten 17 demontieren zu können. Hierzu enthält jede Verriegelungsleiste 37, 38, ebenfalls dem Verteilungsraster der zugeordneten Aufnahmevertiefungen 16 entsprechend verteilt, eine Mehrzahl von Freigabeaussparungen 45. Diese sind so gestaltet, dass der Verriegelungseingriff zwischen Verriegelungsleiste 37, 38 und Anschlusseinheiten 17 aufgehoben ist, wenn sie durch entsprechende Positionierung der Verriegelungsleisten 37, 38 auf gleicher Höhe mit den diversen Aufnahmevertiefungen 16 positioniert sind. Es kann sich bei ihnen insbesondere um kreisbogenförmig konturierte Randausnehmungen der jeweiligen Verriegelungsleiste 37, 38 handeln, deren Randfläche einen größeren Radius zur Längsachse 18 aufweist als die äußere Begrenzung der Anschlagfläche 44. Somit kann die Anschlusseinheit 17 problemlos in beiden Richtungen an den Verriegelungsleisten 37, 38 vorbei eingesteckt oder herausgezogen werden.

In der Zeichnung sind die der zweiten Aufnahmevertiefungsreihe 29 zugeordneten Verriegelungsleisten in der Freigabestellung gezeigt.

Es empfiehlt sich eine abwechselnde Anordnung von Verriegelungszungen 42 und Freigabeaussparungen 45 in der mit der Achsrichtung der Hauptachse 6 zusammenfallenden Längsrichtung der Verriegelungsleisten 37, 38. Dadurch können die Verriegelungsleisten 37, 38 durch Verschieben um nur eine kurze Wegstrecke zwischen der Verriegelungsstellung und der die Montage und Demontage der Anschlusseinheiten 17 ermöglichenden Freigabestellung verlagert werden. Eine Entnahme der Verriegelungsleisten 37, 38 aus den Verriegelungskanälen 33, 34 ist hierzu nicht erforderlich. Insbesondere besteht die Möglichkeit, die Länge der Verriegelungsleisten 37, 38 und der Verriegelungskanäle 33, 34 so aufeinander abzustimmen, dass die Verriegelungsleisten 37, 38 sowohl in der Verriegelungsstellung als auch in der Freigabestellung wie auch bei der Bewegung zwischen diesen beiden Stellungen stets innerhalb der Länge der Verriegelungskanäle 33, 34 verbleiben und nicht über die Stirnflächen 35 vorstehen. Somit ist eine Betätigung auch dann möglich, wenn sich stirnseitig an den Anschlusskörper 5 weitere Komponenten anschließen.

Es wäre prinzipiell möglich, die Verriegelungskanäle 33, 34 nach Art von Bohrungen, also umfangsseitig komplett geschlossen, auszubilden. Eine wesentlich einfachere Herstellung, insbesondere bei Anschlusskörpern 5 größerer Baulängen, ist jedoch dann möglich, wenn die Verriegelungskanäle 33, 34 nutartig ausgebildet und längsseitig offen sind. Bevorzugt liegt die längsseitige Öffnung 46 der Verriegelungskanäle 33, 34 in der Anschlussfläche 15.

Durch eine solche Gestaltung ist es beispielsweise sehr einfach möglich, in Verbindung mit einem als Strangpressteil ausgebildeten Anschlusskörper 5, die nutartigen Verriegelungskanäle 33, 34 bei dem Strangpressvorgang unmittelbar mit einzuformen.

Allerdings kann an dieser Stelle erwähnt werden, dass die Erfindung nicht auf einstückige Anschlusskörper 5 beschränkt ist. Sie lässt sich insbesondere auch dann realisieren, wenn der Anschlusskörper 5 in Richtung seiner Hauptachse 6 mehrfach unterteilt ist, unter Bildung von mehreren jeweils einen oder mehrere Ventil-Montageplätze 8 aufweisenden Anschlusskörpermodulen, die aneinander angesetzt sind, wobei sich an ihnen ausgebildete Kanalabschnitte zu den Verriegelungskanälen 33, 34 ergänzen.

Bevorzugt verfügen die Verriegelungskanäle 33, 34 und/oder die zugeordneten Verriegelungsleisten 37, 38 über ein abgewinkeltes oder abgebogenes Querschnittsprofil. Bei dem abgebildeten, bevorzugten Ausführungsbeispiel ist das Querschnittsprofil L-förmig. Ausgehend von der längsseitigen Öffnung 46 erstreckt sich ein äußerer Schenkel 47 der Verriegelungsleiste 33, 34 nach innen in den Anschlusskörper 5 hinein, wo sich - zur Aufnahmevertiefung 16 hin abgewinkelt oder abgebogen - ein innerer Schenkel 48 anschließt. Die Verriegelungszungen 42 und Freigabeaussparungen 45 sind dem inneren Schenkel 48 zugeordnet.

Durch die abgewinkelte Profilierung ergibt sich ein hinterschnittenes Querschnittsprofil, das dafür sorgt, dass die Verriegelungsleiste 37, 38 in Richtung der Längsachse 18 im Anschlusskörper 5 abgestützt ist und die über die Anschlagfläche 15 auf sie ausgeübten Kräfte in den Anschlusskörper 5 ableiten kann.

Die beiden der gleichen Aufnahmevertiefungsreihe 28 beziehungsweise 29 zugeordneten Verriegelungsleisten 37, 38 können voneinander unabhängige Komponenten sein, die sich getrennt voneinander zwischen der Verriegelungsstellung und der Freigabestellung verlagern lassen. Die Bedienung ist jedoch einfacher, wenn eine einheitliche Betätigung möglich ist. Beim Ausführungsbeispiel ist dies dadurch garantiert, dass die beiden Verriegelungsleisten 37, 38 zu einem Verriegelungsschieber 52 zusammengefasst sind, innerhalb dessen sie zwei fest miteinander verbundene Komponenten darstellen. Ein beispielsweise einem Ende der beiden Verriegelungsleisten 37, 38 zugeordneter Quersteg 53 kann das Paar von Verriegelungsleisten 37, 38 unter Überbrückung ihres Querabstandes fest miteinander verbinden. Der Verriegelungsschieber 52 kann auf diese Weise insgesamt ein U-förmiges Gebilde sein, bei dem die beiden Verriegelungsleisten 37, 38 die U-Schenkel darstellen, die durch den Quersteg 53 miteinander verbunden sind.

Prinzipiell könnten mehrere Querstege 53 an axial beabstandeten Stellen vorgesehen sein. Ein einziger Quersteg 53 hat jedoch den Vorteil, dass sich der Verriegelungsschieber 52 im eingesetzten Zustand der Anschlusseinheiten 17 einschieben oder herausziehen lässt, ohne auf ein Hindernis zu stoßen.

Der Quersteg 53 ist zweckmäßigerweise der Anschlussfläche 15 vorgelagert, insbesondere mit einem gewissen Abstand. Er greift in diesem Fall zweckmäßigerweise an den beiden äußeren Schenkeln 47 an. Beispielsweise ist der Quersteg 53 bügelförmig gestaltet, wobei er sich vergleichbar einem Steg zwischen den beiden Verriegelungsleisten 37, 38 erstreckt.

Der Quersteg 53 kann unmittelbar als Handhabe verwendet werden, an der sich der Verriegelungsschieber 52 erfassen lässt, um die zum Verstellen erforderlichen Betätigungskräfte einzuleiten.

Zweckmäßigerweise ist die Anschlussvorrichtung 3 mit Sicherungsmitteln 54 ausgestattet, die eine Positionssicherung der Verriegelungsleisten 37, 38 in ihrer Verriegelungsstellung ermöglichen. Die exemplarisch gezeigten Sicherungsmittel 54 sichern die Axialposition der Verriegelungsleisten 37, 38 durch Formschluss. Sie enthalten pro Verriegelungsschieber 52 eine Sicherungsschraube 55, die an der Anschlussfläche 15 in den Anschlusskörper 5 eingeschraubt ist, wobei sich ihre Einschraubtiefe variieren lässt.

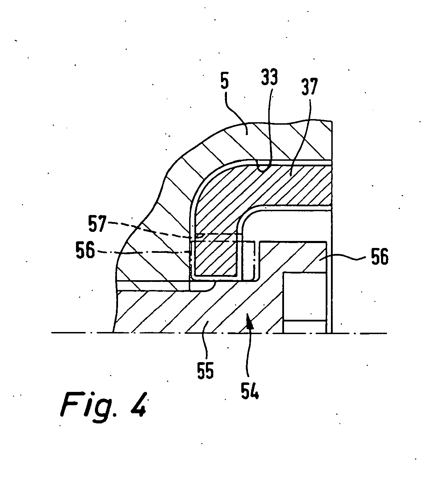

In der Verriegelungsstellung der Verriegelungsleisten 37, 38 liegt dem Kopf 56 der Sicherungsschraube eine Sicherungsaussparung 57 mindestens einer Verriegelungsleiste 37 axial gegenüber, in die der Kopf 56 beim Festziehen der Sicherungsschraube 55 eintauchen kann. Die Sicherungsschraube 55 wird hierbei mit dem Anschlusskörper 5 verspannt, ohne eine Klemmkraft auf die Verriegelungsleiste 37 auszuüben. Dieser Zustand ist in Figur 1 bei dem oben abgebildeten Kopf 56 gezeigt sowie in Figur 4 in strichpunktierter Darstellung.

Um die Verriegelungsleiste 37 verschiebbar zu machen, wird die Sicherungsschraube 55 ein Stück weit herausgeschraubt, sodass der Kopf 56 in die in Figur 1 unten und in Figur 4 in durchgezogenen Linien abgebildete Freigabestellung außerhalb der Sicherungsaussparung 57 gelangt.

Selbstverständlich sind auch andere Sicherungsmaßnahmen denkbar, beispielsweise ein unmittelbares Festklemmen mindestens einer Verriegelungsleiste 37, 38, oder auch eine ausschließlich auf Reibschluss basierende Positionssicherung, die keinen Werkzeugeingriff notwendig macht.

Abweichend vom Ausführungsbeispiel kann jeder Aufnahmevertiefungsreihe 28, 29 auch nur eine einzige Verriegelungsleiste zugeordnet werden. Gleichwohl kann hierbei jeder Aufnahmevertiefungsreihe 28, 29 eine eigene, unabhängige Verriegelungsleiste zugeordnet sein. Hiervon abweichend wäre es auch möglich, zwischen den beiden Aufnahmevertiefungsreihen 28, 29 eine Verriegelungsleiste anzuordnen, die gleichzeitig mit den Anschlusseinheiten 17 beider Aufnahmevertiefungsreihen 28, 29 kooperieren kann. Ebenso könnten die Verriegelungsleisten sämtlicher Aufnahmevertiefungsreihen zu einem Verriegelungsschieber zusammengefasst sein.

Es wäre auch möglich, in mindestens einem Verriegelungskanal mehrere, insbesondere zwei, entsprechend kürzere Verriegelungsleisten anzuordnen, die jeweils unterschiedlichen Gruppen von Aufnahmevertiefungen 16 ein und derselben Aufnahmevertiefungsreihe zugeordnet sind. Insbesondere bei relativ lang bauenden Anschlusskörpern 5 könnte hierbei eine Installation zweier Verriegelungsleisten von einander entgegengesetzten Stirnflächen 35 des Anschlusskörpers 5 her geschehen.

## Patentansprüche

1. Anschlussvorrichtung für Ventile, mit einem sich längs einer Hauptachse (6) erstreckenden Anschlusskörper (5), der mehrere in Richtung der Hauptachse (6) aufeinanderfolgende Ventil-Montageplätze (8) aufweist, an denen Ventile (2) montierbar oder montiert sind, und der mit mindestens einer Reihe (28, 29) aus mehreren, ebenfalls in Richtung der Hauptachse (6) aufeinanderfolgenden, quer zu der Hauptachse (6) zu einer gemeinsamen Anschlussfläche (15) des Anschlusskörpers (5) ausmündenden Aufnahmevertiefungen (16) versehen ist, die mit in dem Anschlusskörper (5) verlaufenden Anschlusskörperkanälen (14) kommunizieren und in die zum Anschließen von Fluidleitungen (4) geeignete Anschlusseinheiten (17) einsteckbar oder eingesteckt sind, deren eingesteckte Gebrauchsstellung durch zu der Anschlussvorrichtung gehörende Verriegelungsmittel (32) bezüglich des Anschlusskörpers (5) lösbar fixierbar ist, wobei die Verriegelungsmittel (32) mindestens einen sich in dem Anschlusskörper (5) längs dessen Hauptachse (6) erstreckenden und dabei zumindest eine Mehrzahl von Aufnahmevertiefungen (16) der mindestens einen Reihe (28, 29) von Aufnahmevertiefungen (16) quer durchsetzenden Verriegelungskanal (33, 34) enthalten, in den eine zu der Anschlussvorrichtung gehörende, längsverschiebbare Verriegelungsleiste (37, 38) einsteckbar oder eingesteckt ist, die eine Verriegelungsstellung einnehmen kann, in der sie gleichzeitig durch mehrere der aufeinanderfolgenden Aufnahmevertiefungen (16) hindurchgreift und mit den darin eingesteckten Anschlusseinheiten (17) unter Verhinderung deren Herausziehens in Verriegelungseingriff steht, **dadurch gekennzeichnet, dass** mindestens einer Reihe (28, 29) von Aufnahmevertiefungen (16) gleichzeitig zwei zueinander parallele Verriegelungskanäle (33, 34) zugeordnet sind, die die Aufnahmevertiefungen (16) mit Querabstand durchsetzen, und in die jeweils eine zu der Anschlussvorrichtung gehörende. Verriegelungsleiste (37, 38) einsetzbar oder eingesetzt ist.

2. Anschlussvorrichtung nach Anspruch 1, **dadurch gekennzeichnet, dass** der mindestens eine Verriegelungskanal (33, 34) sämtliche Aufnahmevertiefungen (16) der mindestens einen Reihe (28, 29) von Aufnahmevertiefungen (16) durchsetzt.

3. Anschlussvorrichtung nach Anspruch 2, **dadurch gekennzeichnet, dass** die in den mindestens einen Verriegelungskanal (33, 34) eingesetzte Verriegelungsleiste (37, 38) in ihrer Verriegelungsstellung durch sämtliche Aufnahmevertiefungen (16) dieser Reihe (28, 29) von Aufnahmevertiefungen (16) hindurchgreift und **dadurch** sämtliche dieser Reihe (28, 29) von Aufnahmevertiefungen (16) zugeordneten Anschlusseinheiten (17) gemeinsam in ihrer Gebrauchsstellung fixieren kann.

4. Anschlussvorrichtung nach einem der Ansprüche 1 bis 3, **dadurch gekennzeichnet, dass** der mindestens eine Verriegelungskanal (33, 34) die von ihm durchsetzten Aufnahmevertiefungen (16) an einer Stelle ihres Umfanges sekantenähnlich anschneidet.

5. Anschlussvorrichtung nach einem der Ansprüche 1 bis 4, **dadurch gekennzeichnet, dass** die beiden Verriegelungskanäle (33, 34) die Aufnahmevertiefungen (16) an einander diametral gegenüberliegenden Umfangsbereichen durchsetzen.

6. Anschlussvorrichtung nach einem der Ansprüche 1 bis 5, **dadurch gekennzeichnet, dass** die beiden Verriegelungsleisten (37, 38) fest miteinander verbundene Bestandteile eines längs der Hauptachse (6) verschiebbaren Verriegelungsschiebers (52) sind.

7. Anschlussvorrichtung nach Anspruch 6, **dadurch gekennzeichnet, dass** die beiden Verriegelungsleisten (37, 38) durch mindestens einen, zweckmäßigerweise als Handhabe fungierenden Quersteg (53) fest miteinander verbunden sind.

8. Anschlussvorrichtung nach Anspruch 7, **dadurch gekennzeichnet, dass** ein Quersteg (53) an einem Endbereich der beiden Verriegelungsleisten (37, 38) angeordnet ist.

9. Anschlussvorrichtung nach Anspruch 7 oder 8, **dadurch gekennzeichnet, dass** der Quersteg (53) der Anschlussfläche (15) in Richtung der Längsachse (18) der Aufnahmevertiefungen (16) vorgelagert ist.

10. Anschlussvorrichtung nach einem der Ansprüche 1 bis 9, **dadurch gekennzeichnet, dass** an der Anschlussfläche (15) mehrere zueinander parallele Reihen (28, 29) von Aufnahmevertiefungen (16) vorhanden sind, denen jeweils mindestens ein Verriegelungskanal (33, 34) mit zugehöriger Verriegelungsleiste (37, 38) zugeordnet ist.

11. Anschlussvorrichtung nach einem der Ansprüche 1 bis 10, **dadurch gekennzeichnet, dass** die mindestens eine Verriegelungsleiste (37, 38) durch Verschieben längs des zugehörigen Verriegelungskanals (33, 34) in einer Freigabestellung positionierbar ist, in der der Verriegelungseingriff mit zweckmäßigerweise sämtlichen Anschlusseinheiten (17) der zugehörigen Reihe (28, 29) von Aufnahmevertiefungen (16) aufgehoben ist.

12. Anschlussvorrichtung nach Anspruch 11, **dadurch gekennzeichnet, dass** die mindestens eine Verriegelungsleiste (37, 38) mehrere entsprechend dem Verteilungsraster der Aufnahmevertiefungen (16) längsverteilte Verriegelungszungen (42) und dazwischen angeordnete Freigabeaussparungen (45) aufweist, wobei in der Verriegelungsstellung die Verriegelungszungen (42) und in der Freigabestellung die Freigabeaussparungen (45) in den Aufnahmevertiefungen (16) positioniert sind.

13. Anschlussvorrichtung nach einem der Ansprüche 1 bis 12, **dadurch gekennzeichnet, dass** Sicherungsmittel (54) vorhanden sind, durch die die mindestens eine Verriegelungsleiste (37, 38) in der Verriegelungsstellung lösbar unverschiebbar festgelegt oder festlegbar ist.

14. Anschlussvorrichtung nach Anspruch 13, **dadurch gekennzeichnet, dass** die Sicherungsmittel (54) eine an der Anschlussfläche (15) in den Anschlusskörper (5) eingeschraubte Sicherungsschraube (55) enthalten, die in eine Sicherungsposition schraubbar ist, in der ihr Kopf (56) in eine Sicherungsaussparung (57) mindestens einer Verriegelungsleiste (37, 38) eintaucht.

15. Anschlussvorrichtung nach einem der Ansprüche 1 bis 14, **dadurch gekennzeichnet, dass** der mindestens eine Verriegelungskanal (33, 34) nutartig ausgebildet und längsseits offen ist.

16. Anschlussvorrichtung nach Anspruch 15, **dadurch gekennzeichnet, dass** der mindestens eine Verriegelungskanal (33, 34) längsseits zur Anschlussfläche (15) hin offen ist.

17. Anschlussvorrichtung nach Anspruch 15 oder 16, **dadurch gekennzeichnet, dass** der mindestens eine Verriegelungskanal (33, 34) und die jeweils zugeordnete Verriegelungsleiste (37, 38) ein abgewinkeltes oder abgebogenes Querschnittsprofil aufweisen.

18. Anschlussvorrichtung nach einem der Ansprüche 15 bis 17, **dadurch gekennzeichnet, dass** der mindestens eine Verriegelungskanal (33, 34) und die zugeordnete Verriegelungsleiste (37, 38) L-förmig profiliert sind.

19. Anschlussvorrichtung nach Anspruch 17 oder 18, **dadurch gekennzeichnet, dass** von dem Verriegelungskanal (33, 34) und der zugehörigen Verriegelungsleiste (37, 38) ein äußerer Schenkel (47) zur Anschlussfläche (15) ausmündet und ein innerer Schenkel (48) den Aufnahmevertiefungen (16) zugewandt ist.

20. Anschlussvorrichtung nach einem der Ansprüche 1 bis 19, **dadurch gekennzeichnet, dass** der Anschlusskörper (5) ein einstückiges Bauteil ist.

21. Anschlussvorrichtung nach Anspruch 20, **dadurch gekennzeichnet, dass** der Anschlusskörper (5) ein einstückiges Strangpressteil ist, in das der mindestens eine Verriegelungskanal (33, 34) bei der Strangpressherstellung unmittelbar eingeformt wurde.

22. Anschlussvorrichtung nach einem der Ansprüche 1 bis 21, **dadurch gekennzeichnet, dass** der mindestens eine Verriegelungskanal (33, 34) zu mindestens einer und zweckmäßigerweise zu beiden in Richtung der Hauptachse (6) orientierten Stirnseiten des Anschlusskörpers (5) offen ist.

23. Anschlussvorrichtung nach einem der Ansprüche 1 bis 22, **dadurch gekennzeichnet, dass** die mit den Aufnahmevertiefungen (16) kommunizierenden Anschlusskörperkanäle (14) andererseits zu den Ventil-Montageplätzen (8) ausmünden.

24. Ventilanordnung, mit einer Anschlussvorrichtung nach einem der Ansprüche 1 bis 23, an deren Ventil-Montageplätzen (8) elektrisch betätigbare Ventile (5) montiert sind.

## Claims

1. Connecting device for valves, comprising a connecting body (5) which extends along a main axis (6) and which has a plurality of valve mounting locations (8) arranged one behind the other in the direction of the main axis (6) where valves (2) can be or are mounted, and which is provided with at least one row (28, 29) of several receiving recesses (16) which are likewise arranged one behind the other in the direction of the main axis (6) and terminate at right angles to the main axis (6) at a common connecting surface (15) of the connecting body (5), and which communicate with connecting body passages (14) extending in the connecting body (5), and into which connecting units (17) suitable for connecting fluid lines (4) can be or are plugged, their plugged-in position of use being releasably locatable with respect to the connecting body (5) by locking means (32) forming a part of the connecting device, wherein the locking means (32) comprise at least one locking passage (33, 34) extending in the connecting body (5) along its main axis (6) while passing transversely through at least a majority of receiving recesses (16) of the at least one row (28, 29) of several receiving recesses (16), into which locking passage (33, 34) can be or is inserted a longitudinally displaceable locking rail (37, 38) which forms a part of the connecting device and which can adopt a locking position in which it simultaneously engages several of the consecutive receiving recesses (16) and in which it is in locking engagement with the plugged-in connecting units (17) while preventing their extraction, **characterised in that** two parallel locking passages (33, 34) which pass through the receiving recesses (16) with transverse spacing and into each of which a locking rail (37, 38) which forms a part of the connecting device can be or is inserted are assigned to at least one row (28, 29) of receiving recesses (16).

2. Connecting device according to claim 1, **characterised in that** the at least one locking passage (33, 34) passes through all of the receiving recesses (16) of the at least one row (28, 29) of receiving recesses (16).

3. Connecting device according to claim 2, **characterised in that** the locking rail (37, 38) inserted into the at least one locking passage (33, 34) engages in its locking position all of the receiving recesses (16) of this row (28, 29) of receiving recesses (16) and is thereby enabled to locate jointly all of the connecting units (17) assigned to this row (28, 29) of receiving recesses (16) in their position of use.

4. Connecting device according to any of claims 1 to 3, **characterised in that** the at least one locking passage (33, 34) cuts the receiving recesses (16) through which it passes in the manner of a secant line at one point of its circumference.

5. Connecting device according to any of claims 1 to 4, **characterised in that** the two locking passages (33, 34) pass through the receiving recesses (16) in diametrically opposed circumferential regions.

6. Connecting device according to any of claims 1 to 5, **characterised in that** the two locking rails (37, 38) are permanently joined parts of a locking slide (52) which is displaceable along the main axis (6).

7. Connecting device according to claim 6, **characterised in that** the two locking rails (37, 38) are permanently joined to each other by a transverse web (53) which expediently acts as a handle.

8. Connecting device according to claim 7, **characterised in that** a transverse web (53) is provided in an end region of the two locking rails (37, 38).

9. Connecting device according to claim 7 or 8, **characterised in that** the transverse web (53) is situated in front of the connecting surface (15) in the direction of the longitudinal axis (18) of the receiving recesses (16).

10. Connecting device according to any of claims 1 to 9, **characterised in that** several parallel rows (28, 29) of receiving recesses (16), to each of which is assigned at least one locking passage (33, 34) with associated locking rail (37, 38), are provided on the connecting surface (15).

11. Connecting device according to any of claims 1 to 10, **characterised in that** the at least one locking rail (37, 38) can, by displacement along the associated locking passage (33, 34), be positioned in a release position in which the locking engagement with expediently all of the connecting units (17) of the associated row (28, 29) of receiving recesses (16) is cancelled.

12. Connecting device according to claim 11, **characterised in that** the at least one locking rail (37, 38) comprises a plurality of locking tabs (42) distributed longitudinally in accordance with the distribution grid of the receiving recesses (16) and release recesses (45) placed in between, wherein the locking tabs (42) are positioned in the receiving recesses (16) in the locking position and the release recesses (45) are positioned therein in the release position.

13. Connecting device according to any of claims 1 to 12, **characterised in that** securing means (54) are provided, by means of which the at least one locking rail (37, 38) is or can be releasably and immovably fixed in the locking position.

14. Connecting device according to claim 13, **characterised in that** the securing means (54) include a securing screw (55) which is tightened into the connecting body (5) at the connecting surface (15) and which can be tightened into a securing position in which its head (56) dips into a securing recess (57) of at least one locking rail (37, 38).

15. Connecting device according to any of claims 1 to 14, **characterised in that** the at least one locking passage (33, 34) is designed as a groove and open along its side.

16. Connecting device according to claim 15, **characterised in that** the at least one locking passage (33, 34) is open along its side towards the connecting surface (15).

17. Connecting device according to claim 15 or 16, **characterised in that** the at least one locking passage (33, 34) and the associated locking rail (37, 38) have an angled or bent cross-sectional profile.

18. Connecting device according to any of claims 15 to 17, **characterised in that** the at least one locking passage (33, 34) and the associated locking rail (37, 38) have an L-shaped profile.

19. Connecting device according to claim 17 or 18, **characterised in that**, from the locking passage (33, 34) and the associated locking rail (37, 38), an outer leg (47) terminates towards the connecting surface (15) and an inner leg (48) faces the receiving recesses (16).

20. Connecting device according to any of claims 1 to 19, **characterised in that** the connecting body (5) is a single-piece component.

21. Connecting device according to claim 20, **characterised in that** the connecting body (5) is a single-piece extruded component in which the at least one locking passage (33, 34) is integrally formed in the extrusion process.

22. Connecting device according to any of claims 1 to 21, **characterised in that** the at least one locking passage (33, 34) is open towards at least one and expediently towards both of the end faces of the connecting body (5), which are oriented in the direction of the main axis (6).

23. Connecting device according to any of claims 1 to 22, **characterised in that** the connecting body passages (14) which communicate with the receiving recesses (16) terminate towards the valve mounting locations (8) at their other ends.

24. Valve assembly with a connecting device according to any of claims 1 to 23, on the valve mounting locations (8) of which electrically operated valves (5) are mounted.

## Revendications

1. Dispositif de raccordement pour vannes, avec un corps de raccordement (5) s'étendant le long d'un axe principal (6), qui présente plusieurs emplacements de montage de vanne (8) successifs en direction de l'axe principal (6), sur lesquels des vannes (2) sont ou peuvent être montées, et qui est pourvu d'au moins une rangée (28, 29) de plusieurs cavités réceptrices (16) successives aussi en direction de l'axe principal (6), débouchant transversalement à l'axe principal (6) vers une surface de raccordement (15) commune du corps de raccordement (5), lesquelles cavités communiquent avec des canaux de corps de raccordement (14) s'étendant dans le corps de raccordement (5) et dans lesquelles cavités des unités de raccordement (17) appropriées au raccordement de conduits de fluide (4) sont ou peuvent être emboîtées, dont la position d'utilisation emboîtée peut être fixée de manière amovible par des moyens de verrouillage (32) appartenant au dispositif de raccordement par rapport au corps de raccordement (5), sachant que les moyens de verrouillage (32) contiennent au moins un canal de verrouillage (33, 34) s'étendant dans le corps de raccordement (5) le long de son axe principal (6) et traversant au moins une pluralité de cavités réceptrices (16) d'au moins une rangée (28, 29) de cavités réceptrices (16), dans lequel canal une languette de verrouillage (37, 38) mobile longitudinalement, appartenant au dispositif de raccordement est ou peut être emboîtée, laquelle peut occuper une position de verrouillage, dans laquelle elle traverse en même temps plusieurs cavités réceptrices (16) successives et est en engagement de verrouillage avec les unités de raccordement (17) emboîtées dedans en empêchant son retrait, **caractérisé en ce que** deux canaux de verrouillage (33, 34) parallèles sont associés en même temps à au moins une rangée (28, 29) de cavités réceptrices (16), lesquels canaux traversent les cavités réceptrices (16) à une distance transversale, et dans lesquels peut ou est insérée respectivement une languette de verrouillage (37, 38) appartenant au dispositif de raccordement.

2. Dispositif de raccordement selon la revendication 1, **caractérisé en ce qu'**au moins un canal de verrouillage (33, 34) traverse toutes les cavités réceptrices (16) d'au moins une rangée (28, 29) de cavités réceptrices (16).

3. Dispositif de raccordement selon la revendication 2, **caractérisé en ce que** la languette de verrouillage (37, 38) insérée dans au moins un canal de verrouillage (33, 34) traverse dans sa position de verrouillage toutes les cavités réceptrices (16) de cette rangée (28, 29) de cavités réceptrices (16) et par là-même peut fixer toutes les unités de raccordement (17) associées à cette rangée (28, 29) de cavités réceptrices (16) ensemble dans leur position d'utilisation.

4. Dispositif de raccordement selon l'une quelconque des revendications 1 à 3, **caractérisé en ce qu'**au moins un canal de verrouillage (33, 34) entaille comme une sécante les cavités réceptrices (16) qu'il traverse à un endroit de leur périphérie.

5. Dispositif de raccordement selon l'une quelconque des revendications 1 à 4, **caractérisé en ce que** les deux canaux de verrouillage (33, 34) traversent les cavités réceptrices (16) sur des zones périphériques diamétralement opposées.

6. Dispositif de raccordement selon l'une quelconque des revendications 1 à 5, **caractérisé en ce que** les deux baguettes de verrouillage (37, 38) sont des constituants fixement reliés l'un à l'autre d'un coulisseau de verrouillage (52) mobile le long de l'axe principal (6).

7. Dispositif de raccordement selon la revendication 6, **caractérisé en ce que** les deux baguettes de verrouillage (37, 38) sont fixement reliées entre elles par au moins une entretoise (53) fonctionnant de manière appropriée comme une manette.

8. Dispositif de raccordement selon la revendication 7, **caractérisé en ce qu'**une entretoise (53) est disposée sur une zone d'extrémité des deux baguettes de verrouillage (37, 38).

9. Dispositif de raccordement selon la revendication 7 ou 8, **caractérisé en ce que** l'entretoise (53) de la surface de raccordement (15) est montée en amont des cavités réceptrices (16) en direction de l'axe longitudinal (18).

10. Dispositif de raccordement selon l'une quelconque des revendications 1 à 9, **caractérisé en ce que** plusieurs rangées (28, 29) parallèles de cavités réceptrices (16) sont présentent sur la surface de raccordement (15), auxquelles rangées est associé respectivement au moins un canal de verrouillage (33, 34) avec une languette de verrouillage afférente (37, 38).

11. Dispositif de raccordement selon l'une quelconque des revendications 1 à 10, **caractérisé en ce qu'**au moins une languette de verrouillage (37, 38) peut être positionnée par déplacement le long du canal de verrouillage (33, 34) afférent dans une position de libération, dans laquelle est supprimé l'engagement de verrouillage de manière appropriée avec toutes les unités de raccordement (17) de la rangée afférente (28, 29) de cavités réceptrices (16).

12. Dispositif de raccordement selon la revendication 11, **caractérisé en ce qu'**au moins une languette de verrouillage (37, 38) présente plusieurs lames de verrouillage (42) réparties sur la longueur selon la trame de répartition des cavités réceptrices (16) et des évidements de libération (45) disposés au milieu, sachant que les lames de verrouillage (42) dans la position de verrouillage et les évidements de libération (45) dans la position de libération sont positionnés dans les cavités réceptrices (16).

13. Dispositif de raccordement selon l'une quelconque des revendications 1 à 12, **caractérisé en ce que** des moyens de blocage (54) sont présents, par lesquels au moins une languette de verrouillage (37, 38) est ou peut être fixée dans la position de verrouillage de manière amovible et immobile.

14. Dispositif de raccordement selon la revendication 13, **caractérisé en ce que** les moyens de blocage (54) contiennent une vis de blocage (55) vissée sur la surface de raccordement (15) dans le corps de raccordement (5), laquelle vis peut être vissée dans une position de blocage, dans laquelle sa tête (56) s'enfonce dans un évidement de blocage (57) au moins d'une languette de verrouillage (37, 38).

15. Dispositif de raccordement selon l'une quelconque des revendications 1 à 14, **caractérisé en ce qu'**au moins un canal de verrouillage (33, 34) est réalisé comme une rainure et est ouvert côté longueur.

16. Dispositif de raccordement selon la revendication 15, **caractérisé en ce qu'**au moins un canal de verrouillage (33, 34) est ouvert côté longueur vers la surface de raccordement (15).

17. Dispositif de raccordement selon la revendication 15 ou 16, **caractérisé en ce qu'**au moins un canal de verrouillage (33, 34) et la languette de verrouillage (37, 38) associée respectivement présentent un profilé de section coudé ou plié.

18. Dispositif de raccordement selon l'une quelconque des revendications 15 à 17, **caractérisé en ce qu'**au moins un canal de verrouillage (33, 34) et la languette de verrouillage associée (37, 38) sont profilés en forme de L.

19. Dispositif de raccordement selon la revendication 17 ou 18, **caractérisé en ce qu'**une branche extérieure (47) débouche vers la surface de raccordement (15) par le canal de verrouillage (33, 34) et la languette de verrouillage afférente (37, 38) et une branche intérieure (48) est tournée vers les cavités réceptrices (16).

20. Dispositif de raccordement selon l'une quelconque des revendications 1 à 19, **caractérisé en ce que** le corps de raccordement (5) est un composant en une seule partie.

21. Dispositif de raccordement selon la revendication 20, **caractérisé en ce que** le corps de raccordement (5) est une pièce extrudée en une seule partie, dans laquelle au moins un canal de verrouillage (33, 34) a été directement moulé lors de la fabrication par extrusion.

22. Dispositif de raccordement selon l'une quelconque des revendications 1 à 21, **caractérisé en ce qu'**au moins un canal de verrouillage (33, 34) est ouvert vers au moins un et de manière appropriée deux côtés frontaux, orientés en direction de l'axe principal (6), du corps de raccordement (5).

23. Dispositif de raccordement selon l'une quelconque des revendications 1 à 22, **caractérisé en ce que** les canaux de corps de raccordement (14) communiquant avec les cavités réceptrices (16) débouchent d'autre part vers les emplacements de montage des vannes (8).

24. Bloc vanne avec un dispositif de raccordement selon l'une quelconque des revendications 1 à 23, sur les emplacements de montage de vanne duquel (8) sont montées des vannes (5) pouvant être actionnées électriquement.
